# EUROPEAN PATENT SPECIFICATION

(11) **EP 1 908 640 B1**
(45) Date of publication and mention of the grant of the patent: **04.03.2009**
(21) Application number: 06020730.5
(22) Date of filing: 02.10.2006
(51) Int. Cl.: B60R 16/037

(54) **Voice control of vehicular elements from outside a vehicular cabin**
Sprachsteuerung von Fahrzeugelementen von außerhalb einer Fahrzeugkabine
Commande vocale d'éléments de véhicule depuis l'extérieur d'une cabine de véhicule

(43) Date of publication of application: 09.04.2008
(73) Proprietor: Harman Becker Automotive Systems GmbH, 76307 Karlsbad (DE)
(72) Inventor: Haulick, Tim, 89143 Blaubeuren (DE); Buck, Markus, 8400 Biberach (DE); Hennecke, Marcus, 89075 Ulm (DE)
(74) Representative: Grünecker, Kinkeldey, Stockmair & Schwanhäusser Anwaltssozietät

(56) References cited:
- DE-C2- 4 027 491
- GB-A- 2 340 975
- JP-A- 3 038 427
- JP-A- 2000 080 828
- US-A1- 2002 152 010
- US-A1- 2006 106 518

## Description

### Field of Invention

The present invention relates to the control of vehicular elements from outside of a vehicular cabin. The invention, in particular, relates to voice control of vehicular elements as, e.g., the hatch or trunk and the hood of an automobile from outside of the automobile.

### Background of the Invention

The passengers of vehicles, in particular, drivers have to operate different apparatus and cabin elements as, e.g., operating controls, mirrors, displays and entertainment devices, before the start of a travel and also while traveling.

The vehicular cabin elements (inside or outside the vehicular cabin) are usually manipulated by hand or by means of servo motors. Given the increasing number of elements to be handled, restriction to manual operation is more and more considered uncomfortable. Moreover, the need or desire for manipulating different devices during the travel distracts the driver's attention thereby increasing the risk of accidents, in particular, in the case of car drives in urban areas.

Therefore, in order to provide passengers of a vehicle with a more comfortable and safer operation of entertainment devices, telephones and navigation systems, voice control systems have recently be installed in vehicular cabins.

GB 2340975 A discloses a biometric swith for an inquiry-response dialogue between a vehicle and a portable code transmitter according to the preamble of claim 1.

However, the handling and movement of vehicular elements outside a vehicular cabin as, e.g., a hatch (back door, trunk) or hood of an automobile, still exclusively requires manual operation. It goes without saying that there is a particularly need to handle the hatch or trunk of an automobile without manual operation. If, e.g., a person wants to store objects he is carrying in both hands in the hatch, he has no hand free for opening the hatch.

It is therefore an object of the present invention to provide an improved operation and control of vehicular elements outside the vehicular cabin.

### Description of the invention

The above mentioned object is achieved by the method for voice control of at least one vehicular element from outside a vehicular cabin according to claim 1, comprising the steps of
arranging at least one microphone, in particular, a directional microphone, in a lamp housing installed in the vehicle body outside the vehicular cabin;
detecting a verbal utterance by means of the at least one microphone to obtain at least one microphone signal;
processing the at least one microphone signal for speech recognition of the verbal utterance to obtain a recognition result; and
automatically controlling the at least one vehicular element on the basis of the recognition result.

Whereas the method can be applied to a variety of vehicles, it preferably enables voice control of elements of automobiles. The at least one vehicular element that is controlled or actuated can be a vehicular element outside the vehicular cabin and can, in particular, be one of a hood, a hatch, a trunk and a convertible top. The vehicular element can also be inside the vehicle, e.g., an air-conditioning system. The detected verbal utterance is uttered by a person outside the vehicle, who may stand in the vicinity of the vehicle or may approaching it.

If, e.g., a person is approaching the back of an automobile and wants the hatch to be opened he might simply utter the verbal command "Open hatch". One or more microphones installed, e.g., in one of the rear lights, detect the utterance. A digitized microphone signal corresponding to the utterance is processed for speech recognition and due to the recognition result, i.e. an appropriate representation of the command "Open hatch", the hatch is automatically opened by some actuator as, e.g., a servo motor that might be directly controlled by a speech recognition means performing speech recognition.

According to the present invention the utterance is detected by one or more microphones installed in one or more lamp housings outside the vehicle cabin as, e.g., a housing of a rear light, a headlight, a fog light or a turn signal (blinker). Thereby, the at least one microphone is securely arranged in a housing without the need for external fixtures for the at least one microphone. Moreover electrical connections to a power supply are readily available in the lamp housing. What is more, the positioning of microphones in lamps represents an acoustical favorable provision of the microphones (see also discussion below). In addition, the detection of structure-borne noise (impact sound) caused, e.g., by rain is minimized by providing the microphones in the lamp housing(s).

In particular, the at least one microphone may be installed in a part of a rear light that is fixed to the vehicle body and not fixed to a hatch or trunk of the vehicle. Thereby, a reliable speech control of the hatch or the trunk can be guaranteed when it is in an open state.

The detected utterance is processed for speech recognition as known in the art and as it is already realized for indoor speech control of, e.g., entertainment devices and navigation systems installed in the vehicular cabin.

Provision of more than one microphone in one lamp housing may be preferred (see also discussion below). At least two microphones may be vertically or horizontally or diagonally arranged in the housing of a rear light or a headlight or a turn signal or a fog lamp. At least three microphones may be arranged in form of a triangle or in an L-form in the housing of a rear light or a headlight or a turn signal or a fog lamp. At least four microphones may be arranged in form of a polygon, in particular, a square or a rectangle, or circularly or elliptically in the housing of a rear light or a headlight or a turn signal or a fog lamp. Other arrangements are, of course, possible that may be a combination of the above-mentioned ones.

Detecting the verbal utterance by more than one microphone enhances the reliability of the herein disclosed method for voice control of a vehicular element outside or inside a vehicular cabin. This holds particularly true, if at least one microphone array, with microphones arranged as mentioned-above, is installed in a lamp housing outside the vehicular cabin by which the verbal utterance is detected, and wherein the method further comprises beamforming of microphone signals obtained by the individual microphones of the microphone array to obtain a beamformed microphone signal that is processed for speech recognition.

Beamforming comprises amplification of microphone signals corresponding to audio signals detected from a wanted signal direction by equal phase addition and attenuation of microphone signals corresponding to audio signals generated at positions in other direction. The beamforming might be performed by a fixed beamformer or an adaptive beamformer characterized by a permanent adaptation of processing parameters such as filter coefficients during operation (see e.g., "Adaptive beamforming for audio signal acquisition", by Herbordt, W. and Kellermann, W., in "Adaptive signal processing: applications to real-world problems", p.155, Springer, Berlin 2003).

When beamforming is performed at least two microphones are arranged in at least one lamp housing installed in the vehicle body outside the vehicular cabin and the inventive method may comprise
detecting a difference in signal transit time between a microphone signal obtained by one of the at least two microphones and a microphone signal obtained by another one of the at least two microphones;
determining the location of a speaker outside the vehicle whose verbal utterance is detected by the at least two microphones on the basis of the detected difference in signal transit time of the respective microphone signals; and
attenuating the microphone signal of at least one microphone that detects an audio signal with a power level that exceeds a predetermined limit that is not generated in a predetermined vicinity of the determined location of the speaker outside the vehicle.

The difference in signal transit time of microphone signals of microphones of one microphone array or in the signal transit time of a beamformed microphone signal of one microphone array and another microphone array may be detected on the basis of which the location of the speaker outside the vehicle is determined. For example, a microphone array comprising vertically arranged microphones may be installed in one rear light and another microphone array may be arranged in another rear light of the vehicle. Since the arrays are separated by a relatively large distance a high spatial resolution of the direction of the source of a wanted signal (speaker) is, in principle, available. However, it might me preferred to install one microphone array only, say in the left rear light, in order to save costs. In particular, for a vertical spatial resolution one microphone array installed in one lamp housing might be sufficient.

Attenuation of microphone signals that detect audio signals with significant contributions generated apart from a speaker's position enhances the quality of the beamformed microphone signal used for the speech recognition processing. The predetermined limit can be a percentage of the wanted signal obtained from the speaker's position.

According to an example of the herein disclosed method a fixed beamformer, e.g., a delay-and-sum beamformer as known in the art, may be employed to obtain a beamformed microphone signal that is processed for speech recognition.

Since the quality of the beamformed microphone signal, i.e. the signal-to-noise ratio of the wanted signal, is significantly enhanced as compared to a microphone signal detected by one single microphone only, the speech recognition is expected to be more successful. Accordingly, the recognition result will more freqently lead to the desired operation as, e.g., the opening or closing of a hatch, a hood or a convertible top of an automobile.

According to an embodiment of the inventive method
at least two microphones are vertically or diagonally arranged in the housing of one rear light or at least three microphones are arranged in an L-form in the housing of one rear light, wherein at least two microphones are arranged vertically, or at least four microphones are arranged in form of a square or a rectangle or circularly or elliptically in the housing of one rear light;
each microphone detects acoustic signals and each one obtains a microphone signal; and the method further comprises
detecting a difference in signal transit time between a microphone signal obtained by one of the at least two microphones vertically arranged below or above another one and a microphone signal obtained by the other one of the at least two microphones;
determining a vertical angle of incidence of the acoustic signals with respect to a horizontal plane on the basis of the detected difference in signal transit time; and
attenuating microphone signals obtained from acoustic signals with a determined vertical angle of incidence with respect to a horizontal plane that lies below a predetermined limit to obtain a beamformed microphone signal that is processed for speech recognition.

In other words, the vertically arranged microphones obtain microphone signals that exhibit a transit time due to their different vertical positions. Thereby, a vertical angle of incidence of acoustic signals detected by the microphones can be determined. Acoustic (speech) signals from a speaker approaching the back of a vehicle, e.g., are typically generated at some height above the height of the hatch of the vehicle.

Accordingly, the uppermost microphone of the vertical microphone arrangement will detect the speaker's utterance earlier than a microphone positioned below in dependence on the vertical angle of incidence of the acoustic signals.

On the other hand, perturbations generated relatively far away, in particular, somewhere more distant to the vehicle than the speaker's position, usually hit the microphone array with a relatively small vertical angle, i.e. substantially from a horizontal direction. By horizontal plane and horizontal direction a plane and direction, respectively, is meant that can be defined with respect to (including) a connection line of the front and back tires of the vehicle or the rear and headlights, for example. Horizontal may also be defined with respect to the slope of the street/road on which the vehicle stands.

Thus, only audio signals coming from a source located in a vertical angle range above a predetermined value may be considered for the speech recognition processing in order to improve the reliability of the recognition result and thereby the customer's acceptance of the inventive speech control of vehicular elements outside or inside the vehicular cabin can be significantly increased.

It should be noted that in the above example it might also be possible to determine the vertical angle of incidence of the acoustic signals additionally by a second microphone array installed in a second rear light housing. A combination of both determination results, e.g., an averaged determined inclination, may be used for the further processing.

The present invention, furthermore, provides a rear light for an automobile, comprising a rear light housing and at least one microphone, in particular, a directional microphone, in the rear light housing. By means of such a rear light speech signals outside a vehicular cabin can be detected which subsequently can be processed for speech recognition. A directional microphone may be used to improve the signal-to-noise ratio of the obtained microphone signal.

At least two microphones may be arranged vertically or horizontally or diagonally or at least three microphones may be arranged in form of a triangle or in L-form or at least four microphones may be arranged in form of a polygon, in particular, a triangle, a square or a rectangle, or circularly or elliptically in the rear light housing of the inventive rear light.

The inventive rear light may comprise a part (of the housing) fixed to the vehicle body and another part fixed to a hatch or trunk of a vehicle in which case the at least one microphone may advantageously be positioned in the part of the rear light (housing) that is fixed to the vehicle body. In this case, it is guaranteed that a speaker's utterance is readily detected, even if the hatch or trunk of the vehicle is opened.

The invention also provides a headlight of an automobile, comprising a headlight housing and at least one microphone, in particular, a directional microphone, in the headlight housing.

At least two microphones may be arranged vertically or horizontally or diagonally or at least three microphones may be arranged in form of a triangle or in L-form or at least four microphones may be arranged in form of a polygon, in particular, a triangle, a square or a rectangle, or circularly or elliptically in the headlight housing.

It is additionally provided a tum signal light (blinker) of an automobile, comprising a turn signal light housing and at least one microphone, in particular, a directional microphone, in the turn signal light housing.

At least two microphones may be arranged vertically or horizontally or diagonally or at least three microphones may be arranged in form of a triangle or in L-form or at least four microphones may be arranged in form of a polygon, in particular, a triangle, a square or a rectangle, or circularly or elliptically in the turn light housing.

Any combination of the above-mentioned arrangements of the microphones in the rear light, headlight or signal light housing, respectively, may be preferred according to the actual application. It is also noted that the rear light, headlight and tum signal light mentioned above may advantageously comprise a cover made of glass or plastics that exhibit a high transmissibility for sound, in particular, for speech signals.

The above mentioned object is also achieved by a voice control system for voice control of at least one vehicular element according to claim 19. This voice control system comprises
at least one microphone, in particular, a directional microphone, provided in at least one lamp housing installed in the vehicle body outside the vehicular cabin and configured to detect an acoustic signal to obtain at least one microphone signal;
a signal processing means configured to receive and to process the at least one microphone signal to obtain a processed signal;
a speech recognition means configured to receive the processed signal and to obtain a recognition result on the basis of the processed signal;
at least one actuator as, e.g., a servo motor configured to actuate the at least one vehicular element; and
a control means configured to control the actuator to actuate the at least one vehicular element in response to the recognition result.

The vehicular element may be an element outside or inside the vehicular cabin.

The processed signal is a digital signal comprising a speech signal corresponding to a verbal utterance detected by the at least one microphone. The speech recognition means is configured to recognize verbal utterances, either isolated words or continuous speech captured by at least one microphone and converted to analogue electric signals that subsequently are digitalized. The digital signals may be, e.g., subject to a subsequent spectral analysis performed by the recognition means. For example, representations of the speech waveforms sampled typically at a rate between 6.6 kHz and 22.1 kHz are derived from the short term power spectra and represent a sequence of characterizing vectors containing values of what is generally referred to as features/feature parameters. The values of the feature parameters can be used in succeeding stages in the estimation of the probability that the portion of the analyzed waveform corresponds to, for example, a particular entry, i.e. a word, in a vocabulary list.

The recognition result (e.g., an entry in a vocabulary list) is a representation of the verbal utterance that is considered as most likely corresponding to the utterance. If, e.g., a user of the voice control system utters "Open hatch" an appropriate recognition result would result in an instruction by the control means to an actuator connected with the hatch to open the hatch. There is no need for any manual operation by the user of the inventive voice control system.

The voice control system advantageously includes any of the above mentioned herein disclosed rear lights, headlights and/or turn signal lights. Moreover, one of the above discussed examples for beamforming may be incorporated in the voice control system giving raise to the advantages described above.

Thus, the voice control system may comprise a microphone array in at least one lamp housing and the signal processing means may comprise a beamforming means configured to receive microphone signals from each of the microphones of the microphone array and to obtain a beamformed microphone signal in which case the processed signal comprises the beamformed microphone signal. The beamforming means may be a fixed beamformer, e.g., delay-and-sum beamformer, or an adaptive one.

Moreover, a so-called "General Sidelobe Canceller" (GSC), see, e.g., "An alternative approach to linearly constrained adaptive beamforming", by Griffiths, L.J. and Jim, C.W., IEEE Transactions on Antennas and Propagation, vol. 30, p.27, 1982, may be included in the herein disclosed voice control system in order to further enhance the quality of the processed signal. The GSC consists of two signal processing paths: a first (or lower) adaptive path with a blocking matrix and an adaptive noise cancelling means and a second (or upper) non-adaptive path with a fixed beamformer.

When equipped with a beamforming means the voice control system may be configured to detect a difference in signal transit time between the microphone signals obtained by the microphones of the microphone array detecting acoustic signals, to determine the location of a speaker outside the vehicle on the basis of the detected difference in signal transit time of the microphone signals and to attenuate the microphone signal of at least one microphone that detects an audio signal with a power level that exceeds a predetermined limit, e.g., some percentage of an audio signal coming form the location of a speaker, that is not generated in a predetermined vicinity, e.g., in the range of some meters, of the determined location of the speaker outside the vehicle. Audio signals coming from the determined location of the speaker, on the other hand, can be amplified.

When equipped with the beamforming means the voice control system according to an embodiment comprises a signal processing means that is configured to detect a difference in signal transit time between the microphone signals obtained by the microphones detecting acoustic signals, determine a vertical angle of incidence of the acoustic signals with respect to a horizontal plane on the basis of the detected difference in signal transit time and to attenuate microphone signals obtained from acoustic signals with a determined vertical angle of incidence with respect to a horizontal plane that lies below a predetermined limit. The signal processing means may also be configured to amplify microphone signals obtained from acoustic signals with a determined vertical angle of incidence with respect to a horizontal plane that exceeds the predetermined limit.

The present invention also provides a vehicle in which the voice control system according to one of the above described examples is installed as well as a vehicle comprising one or more of the above-mentioned rear lights. headlights and tum signal lights.

Additional features and advantages of the invention will be described with reference to the drawings:
Figure 1 shows examples of the inventive rear light comprising three or more microphones.
Figure 2 is illustrates discrimination of different sources of audio signals according to an example of the herein disclosed method for voice control of at least one vehicular element outside a vehicular cabin, in this case the hatch of an automobile, in which a microphone array is installed in a rear light of a vehicle and beamforming is performed.

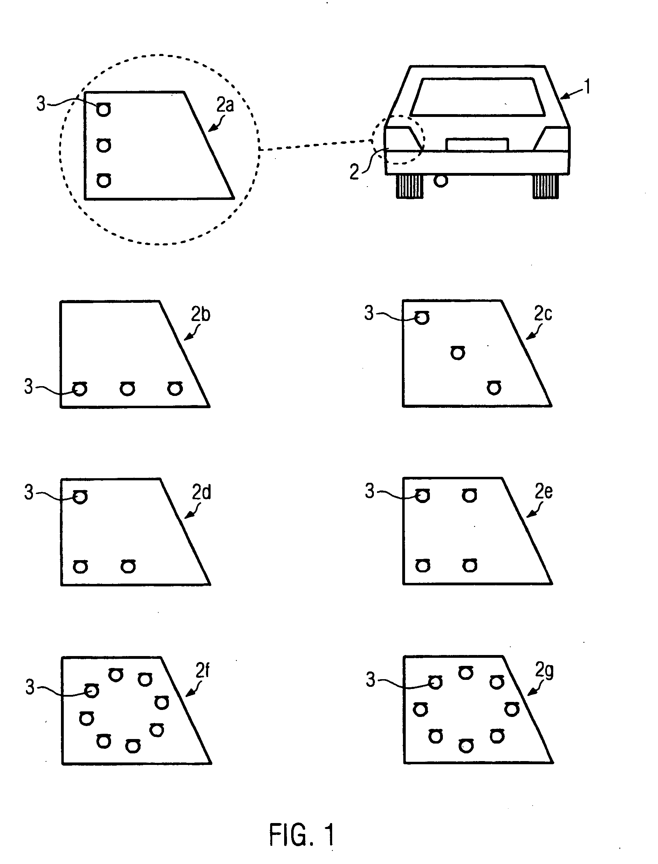

Figure 1 illustrates examples of different kinds of arrangements of microphones 3 in a rear light 2 of an automobile 1. In the present example, the entire rear light (housing) 2 is installed in the vehicle body and no part of it is fixed to the hatch.

According to the present invention one or more microphones can be installed in one or more rear lights to detect verbal utterances of a person who wants to open or close, e.g., a hatch by voice control. The illustrated example shows microphones 3 in the left rear light 2 of a vehicle 1. Corresponding arrangements can be provided alternatively or in addition for the right rear light.

Examples for suitable arrangements of microphones 3 in the rear light 2 include a vertical arrangement 2a of three microphones 3 or a horizontal arrangement 2b of three microphones 3. Whereas the shown microphones 3 are placed on the left-hand-side 2a or at the bottom 2b of the rear light 2, respectively, they can also be placed in the middle or on the right-hand-side in case of the vertical arrangement 2a and in the middle or at the top in case of the horizontal arrangement 2b. The microphones 3 may also be placed somewhat offset from the middle. These remarks on the positioning of the microphones 3 also hold mutatis mutandis for the examples mentioned in the following.

Three or more microphones 3 can also be arranged diagonally 2c or in L-form 2d. The L-form shown in Figure 1 (2d ) may be rotated by any degree. Four or more microphone 3 may be arranged in form of a rectangle 2e, in particular, in form of a square. Any other polygon form may be used for arrangement of the microphones. Multiple microphones 3 may also be arranged in circular 2f or elliptic shape 2e.

The particular chosen arrangement of multiple microphones 3 influences a possible beamforming of the individual microphone signals obtained by the microphones of the arrays 2a - 2g shown in Figure 1. It is particularly advantageous that two or more microphones 3 are arranged vertically, since in this case a vertical angle of incidence of acoustic signals can be determined from a difference in transit times of microphone signals obtained by the vertically arranged microphones.

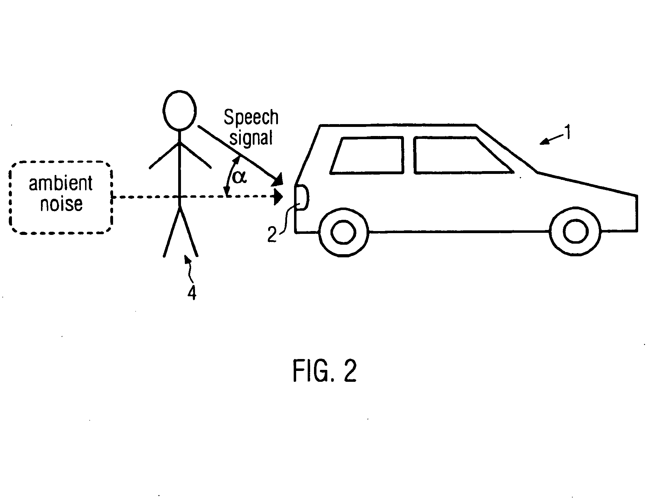

Consider the situation illustrated in Figure 2. A person 4 is approaching an automobile 1 from the back. The automobile 1 is provided with a rear light 2 comprising a number of vertically arranged microphones (not shown in Figure 1). These microphones detect ambient noise which almost horizontally hits the rear light and, thus, the microphones. The automobile 1 is also provided with a speech control systems for operating the hatch of the automobile 1 by a verbal command. The speech control system comprises a signal processing means that can determine a difference in the transit time of the individual microphone signals.

No significant time difference for the detection of the ambient noise can be determined for the individual microphones. However, a verbal utterance by the person 4 is generated at some finite angle α with respect to the horizontal plane. Thus, a speech signal generated by the person 4 will be detected by the individual vertically arranged microphones in the rear at slightly different times. From the time difference the vertical angle of incidence can be determined.

The obtained information on the angle of incidence can be used for the further signal processing. For example, audio signals associated with an angle of incidence below some 10 or 20 degrees are attenuated by the signal processing means. Contrary, acoustic signals that are generated at an angle of α > α_{L}, where α_{L} denotes some threshold value, are passed in form of unaffected microphone signals or they are amplified.

By the multi-channel signal processing a processed signal with an enhanced signal-to-noise ratio is obtained. Therefore, the speech recognition of the detected speech signal will be more reliable. In the present example, the person 4 may, thus, successfully control opening and closing of the hatch of the automobile 1 by voice control.

## Claims

1. Method for voice control of at least one vehicular element from outside a vehicular cabin, comprising
detecting a verbal utterance by means of at least one microphone (3) to obtain at least one microphone signal;
processing the at least one microphone signal for speech recognition of the verbal utterance to obtain a recognition result; and
automatically controlling the at least one vehicular element on the basis of the recognition result;
**characterized by**
arranging the at least one microphone (3), in particular, a directional microphone (3), in a lamp housing installed in the vehicle body outside the vehicular cabin for detecting the verbal utterance.

2. Method according to claim 1, wherein the at least one vehicular element is one of a hood, a hatch, a trunk and a convertible top.

3. Method according to claim 2, wherein the at least one microphone (3) is installed in the housing of a rear light (2) or a headlight or a turn signal or a fog lamp.

4. Method according to claim 3, wherein at least two microphones (3) are vertically or horizontally or diagonally arranged in the housing of a rear light (2) or a headlight or a turn signal or a fog lamp.

5. Method according to claim 3, wherein at least three microphones (3) are arranged in form of a triangle or in an L-form in the housing of a rear light (2) or a headlight or a turn signal or a fog lamp.

6. Method according to claim 3, wherein at least four microphones (3) are arranged in form of a polygon, in particular, a square or a rectangle, or circularly or elliptically in the housing of a rear light (2) or a headlight or a turn signal or a fog lamp.

7. Method according to one of the preceding claims, wherein at least one microphone array is installed in a lamp housing outside the vehicular cabin by which the verbal utterance is detected and further comprising beamforming of microphone signals obtained by the microphones (3) of the microphone array to obtain a beamformed microphone signal that is processed for speech recognition.

8. Method according to claim 7, wherein at least two microphones (3) are arranged in at least one lamp housing installed in the vehicle body outside the vehicular cabin and further comprising
detecting a difference in signal transit time between a first microphone signal obtained by one of the at least two microphones (3) and a second microphone signal obtained by another one of the at least two microphones (3);
determining the location of a speaker outside the vehicle on the basis of the detected difference in signal transit time of the first and the second microphone signals; and
attenuating the microphone signal of at least one microphone (3) that detects an audio signal with a power level that exceeds a predetermined limit that is not generated in a predetermined vicinity of the determined location of the speaker outside the vehicle.

9. Method according to claim 8, wherein the difference in signal transit time of microphone signals of microphones (3) of one microphone array or in the signal transit time of a beamformed microphone signal of one microphone array and another microphone array is detected on the basis of which the location of the speaker outside the vehicle is determined.

10. Method according to one of the claims 1 - 3, wherein
at least two microphones (3) are vertically or diagonally arranged in the housing of one rear light (2) or at least three microphones (3) are arranged in an L-form in the housing of one rear light (2), wherein at least two microphones (3) are arranged vertically, or at least four microphones (3) are arranged in form of a square or a rectangle or circularly or elliptically in the housing of one rear light (2);
each microphone (3) detects acoustic signals to obtain a microphone signal; and further comprising
detecting a difference in signal transit time between at least two microphone signal obtained at least two microphones (3) that are vertically arranged;
determining a vertical angle of incidence of the acoustic signals with respect to a horizontal plane on the basis of the detected difference in signal transit time; and
attenuating microphone signals obtained from acoustic signals with a determined vertical angle of incidence with respect to a horizontal plane that lies below a predetermined limit to obtain a beamformed microphone signal that is processed for speech recognition.

11. Method according to one of the preceding claims, wherein at least one microphone (3) is installed in a part of a rear light (2) that is fixed to the vehicle body and not fixed to a hatch or trunk of the vehicle.

12. Lamp housing for installment in a vehicle body outside a vehicular cabin, **characterized by** comprising at least one microphone (3), in particular, a directional microphone (3).

13. Rear light (2) for an automobile, comprising the lamp housing according to claim 12 as a rear light (2) housing.

14. Rear light (2) according to claim 13, wherein at least two microphones (3) are arranged vertically or horizontally or diagonally or at least three microphones (3) are arranged in form of a triangle or in L-form or at least four microphones (3) are arranged in form of a polygon, in particular, a triangle, a square or a rectangle, or circularly or elliptically in the rear light (2) housing.

15. Rear light (2) according to claim 13 or 14, comprising a part fixed to the vehicle body and another part fixed to a hatch or trunk of a vehicle and wherein the at least one microphone (3) is positioned in the part of the rear light (2) that is fixed to the vehicle body.

16. Headlight of an automobile, comprising the lamp housing according to claim 12 as a headlight housing.

17. Headlight of an automobile according to claim 16, wherein at least two microphones (3) are arranged vertically or horizontally or diagonally or at least three microphones (3) are arranged in form of a triangle or in L-form or at least four microphones (3) are arranged in form of a polygon, in particular, a triangle, a square or a rectangle, or circularly or elliptically in the headlight housing.

18. Turn signal light of an automobile, comprising the lamp housing according to claim 12 as a turn signal light housing.

19. Turn signal light according to claim 18, wherein at least two microphones (3) are arranged vertically or horizontally or diagonally or at least three microphones (3) are arranged in form of a triangle or in L-form or at least four microphones (3) are arranged in form of a polygon, in particular, a triangle, a square or a rectangle, or circularly or elliptically in the turn light housing.

20. Voice control system for voice control of at least one vehicular element, comprising
at least one lamp housing according to claim 12 , wherein the at least one microphone (3) is configured to detect an acoustic signal to obtain at least one microphone signal;
a signal processing means configured to receive and to process the at least one microphone signal to obtain a processed signal;
a speech recognition means configured to receive the processed signal and to obtain a recognition result on the basis of the processed signal;
at least one actuator configured to actuate the at least one vehicular element; and
a control means configured to control the actuator to actuate the at least one vehicular element in response to the recognition result.

21. Voice control system according to claim 20, comprising a rear light (2) according to one of the claims 13 - 15 and/or a headlight according to claim 16 or 17 and/or a turn signal light according to claim 18 or 19.

22. Voice control system according to claim 20 or 21, comprising a microphone array in at least one lamp housing; and wherein
the signal processing means comprises a beamforming means configured to receive microphone signals from each of the microphones (3) of the microphone array and to obtain a beamformed microphone signal; and wherein
the processed signal comprises the beamformed microphone signal.

23. Voice control system according to claim 22, wherein the signal processing means is configured to
detect a difference in signal transit time between the microphone signals obtained by the microphones (3) of the microphone array detecting acoustic signals;
determine the location of a speaker outside the vehicle on the basis of the detected difference in signal transit time of the microphone signals; and
attenuate the microphone signal of at least one microphone (3) that detects an audio signal with a power level that exceeds a predetermined limit that is not generated in a predetermined vicinity of the determined location of the speaker outside the vehicle.

24. Voice control system according to claim 22, wherein the signal processing means is configured to
detect a difference in signal transit time between the microphone signals obtained by the microphones (3) detecting acoustic signals;
determine a vertical angle of incidence of the acoustic signals with respect to a horizontal plane on the basis of the detected difference in signal transit time; and
to attenuate microphone signals obtained from acoustic signals with a determined vertical angle of incidence with respect to a horizontal plane that lies below a predetermined limit.

## Patentansprüche

1. Verfahren zur Sprachsteuerung von zumindest einem Fahrzeugelement von außerhalb einer Fahrzeugkabine, das umfasst
Detektieren einer verbalen Äußerung mithilfe von zumindest einem Mikrofon (3), um zumindest ein Mikrofonsignal zu erhalten;
Verarbeiten des zumindest einen Mikrofonsignals zur Spracherkennung der verbalen Äußerung, um ein Erkennergebnis zu erhalten; und
automatisches Steuern des zumindest einen Fahrzeugelements auf der Grundlage des Erkennergebnisses;
**gekennzeichnet durch**
Anordnen des zumindest einen Mikrofons (3), insbesondere eines Richtmikrofons (3), in einem Lampengehäuse, das in der Fahrzeugkarosserie außerhalb der Fahrzeugkabine angebracht ist, zum Detektieren der verbalen Äußerung.

2. Verfahren gemäß Anspruch 1, in dem das zumindest eine Fahrzeugelement entweder eine Motorhaube, eine Heckklappe, eine Kofferraumklappe oder ein Verdeck ist.

3. Verfahren gemäß Anspruch 2, in dem das zumindest eine Mikrofon (3) in dem Gehäuse eines Rücklichts (2) oder eines Scheinwerfers oder einer Blinkleuchte oder einer Nebelleuchte angebracht ist.

4. Verfahren gemäß Anspruch 3, in dem zumindest zwei Mikrofone (3) vertikal oder horizontal oder diagonal in dem Gehäuse eines Rücklichts (2) oder eines Scheinwerfers oder einer Blinkleuchter oder einer Nebelleuchte angeordnet sind.

5. Verfahren gemäß Anspruch 3, in dem zumindest drei Mikrofone (3) in Form eines Dreiecks oder in einer L-Form in dem Gehäuse eines Rücklichts (2) oder eines Scheinwerfers oder einer Blinkleuchte oder einer Nebelleuchte angeordnet sind.

6. Verfahren gemäß Anspruch 3, in dem zumindest vier Mikrofone (3) in Form eines Polygons, insbesondere eines Quadrats oder eines Rechtecks, oder kreisförmig oder elliptisch in dem Gehäuse eines Rücklichts (2) oder eines Scheinwerfers oder einer Blinkleuchte oder einer Nebelleuchte angeordnet sind.

7. Verfahren gemäß einem der vorhergehenden Ansprüche, in dem zumindest eine Mikrofonanordnung in einem Lampengehäuse außerhalb der Fahrzeugkabine angebracht ist, durch die die verbale Äußerung detektiert wird, und weiterhin Beamforming von Mikrofonsignalen umfassend, die durch die Mikrofone (3) der Mikrofonanordnung erhalten werden, um ein gebeamformtes Mikrofonsignal zu erhalten, das zur Spracherkennung verarbeitet wird.

8. Verfahren gemäß Anspruch 7, in dem zumindest zwei Mikrofone (3) in zumindest einem Lampengehäuse angeordnet sind, das in der Fahrzeugkarosserie außerhalb der Fahrzeugkabine angebracht ist, und das weiterhin umfasst
Detektieren eines Unterschieds in der Signallaufzeit zwischen einem ersten Mikrofonsignal, das von einem der zumindest zwei Mikrofone (3) erhalten wird, und einem zweiten Mikrofonsignal, das von einem anderen der zumindest zwei Mikrofone (3) erhalten wird;
Bestimmen der Position eines Sprechers außerhalb des Fahrzeugs auf der Grundlage des detektierten Unterschieds in der Signallaufzeit zwischen dem ersten und dem zweiten Mikrofonsignal, und
Dämpfen des Mikrofonsignals von zumindest einem Mikrofon (3), das ein Audiosignal mit einem Leistungspegel detektiert, der eine vorbestimmte Grenze überschreitet, das nicht in einer vorbestimmten Nähe der bestimmten Position des Sprechers außerhalb des Fahrzeugs erzeugt wird.

9. Verfahren gemäß Anspruch 8, in dem der Unterschied in der Signallaufzeit von Mikrofonsignalen von Mikrofonen (3) einer Mikrofonanordnung oder in der Signallaufzeit eines gebeamformten Mikrofonsignals einer Mikrofonanordnung und einer anderen Mikrofonanordnung detektiert wird, auf der Grundlage dessen die Position des Sprechers außerhalb des Fahrzeugs bestimmt wird.

10. Verfahren gemäß einem der Ansprüche 1 - 3, in dem
zumindest zwei Mikrofone (3) vertikal oder diagonal in dem Gehäuse eines Rücklichts (2), oder zumindest drei Mikrofone (3) in einer L-Form in dem Gehäuse eines Rücklichts (2), wobei zumindest zwei Mikrofone (3) vertikal angeordnet sind, angeordnet sind, oder in dem zumindest vier Mikrofone (3) in Form eines Quadrats oder eines Rechtecks oder kreisförmig oder elliptisch in dem Gehäuse eines Rücklichts (2) angeordnet sind;
jedes Mikrofon (3) akustische Signale detektiert, um ein Mikrofonsignal zu erhalten; und weiterhin umfassend
Detektieren eines Unterschieds in der Signallaufzeit zwischen zumindest zwei Mikrofonsignalen, die durch zwei Mikrofon (3) erhalten werden, die vertikal angeordnet sind;
Bestimmen eines vertikalen Einfallswinkels der akustischen Signale in Hinsicht auf eine horizontale Ebene auf der Grundlage des detektierten Unterschieds in der Signallaufzeit; und
Dämpfen von Mikrofonsignalen, die aus akustischen Signalen mit einem bestimmten vertikalen Einfallswinkel in Hinsicht auf eine horizontale Ebene erhalten werden, der unterhalb einer vorbestimmten Grenze liegt, um ein gebeamformtes Mikrofonsignal zu erhalten, das zur Spracherkennung verarbeitet wird.

11. Verfahren gemäß einem der vorhergehenden Ansprüche, in dem zumindest ein Mikrofon (3) in einem Teil eines Rücklichts (2) angebracht ist, das an der Fahrzeugkarosserie befestigt ist und nicht an einer Heckklappe oder einer Kofferraumklappe des Fahrzeugs befestigt ist.

12. Lampengehäuse zur Installation in einer Fahrzeugkarosserie außerhalb einer Fahrzeugkabine, **dadurch gekennzeichnet, dass** es zumindest ein Mikrofon (3), insbesondere ein Richtmikrofon (3), umfasst.

13. Rückleuchte (2) für ein Automobil, die das Lampengehäuse gemäß Anspruch 12 als ein Rückleuchten(2) - Gehäuse umfasst.

14. Rückleuchte (2) gemäß Anspruch 13, in der zumindest zwei Mikrofone (3) vertikal oder horizontal oder diagonal angeordnet sind, oder zumindest drei Mikrofone (3) in Form eines Dreiecks oder in L-Form angeordnet sind, oder zumindest vier Mikrofone (3) in Form eines Polygons, insbesondere eines Dreiecks, eines Quadrats oder eines Rechtecks, oder kreisförmig oder elliptisch in dem Rückleuchten(2) - Gehäuse angeordnet sind.

15. Rückleuchte (2) gemäß Anspruch 13 oder 14, die ein Teil umfasst, das an der Fahrzeugkarosserie befestigt ist, und ein anderes Teil, das an einer Heckklappe oder einer Kofferraumklappe eines Fahrzeugs befestigt ist, und in der das zumindest eine Mikrofon (3) in dem Teil der Rückleuchte (2) positioniert ist, das an der Fahrzeugkarosserie befestigt ist.

16. Scheinwerfer eines Automobils, der das Lampengehäuse gemäß Anspruch 12 als ein Scheinwerfergehäuse umfasst.

17. Scheinwerfer eines Automobils gemäß Anspruch 16, in dem zumindest zwei Mikrofone (3) vertikal oder horizontal oder diagonal angeordnet sind, oder zumindest drei Mikrofone (3) in Form eines Dreiecks oder in L-Form angeordnet sind, oder zumindest vier Mikrofone (3) in Form eines Polygons, insbesondere eines Dreiecks, eines Quadrats oder eines Rechtecks, oder kreisförmig oder elliptisch in dem Scheinwerfergehäuse angeordnet sind.

18. Blinkleuchte eines Automobils, die das Lampengehäuse gemäß Anspruch 12 als ein Blinkleuchtengehäuse umfasst.

19. Blinkleuchte gemäß Anspruch 18, in der zumindest zwei Mikrofone (3) vertikal oder horizontal oder diagonal angeordnet sind, oder zumindest drei Mikrofone (3) in Form eines Dreiecks oder in L-Form angeordnet sind, oder zumindest vier Mikrofone (3) in Form eines Polygons, insbesondere eines Dreiecks, eines Quadrats oder eines Rechtecks, oder kreisförmig oder elliptisch in dem Blinkleuchtengehäuse angeordnet sind.

20. Sprachsteuerungssystem zur Sprachsteuerung von zumindest einem Fahrzeugelement, das umfasst
zumindest ein Lampengehäuse gemäß Anspruch 12, in dem das zumindest eine Mikrofon (3) dazu ausgebildet ist, ein akustisches Signal zu detektieren, um zumindest ein Mikrofonsignal zu erhalten;
eine Signalverarbeitungseinrichtung, die dazu ausgebildet ist, das zumindest eine Mikrofonsignal zu empfangen und zu verarbeiten, um ein verarbeitetes Signal zu erhalten;
eine Spracherkennungseinrichtung, die dazu ausgebildet ist, das verarbeitete Signal zu empfangen und ein Erkennergebnis auf der Grundlage des verarbeiteten Signals zu erhalten;
zumindest einen Stellmotor, der dazu ausgebildet ist, das zumindest eine Fahrzeugelement zu betätigen; und
eine Steuereinrichtung, die dazu ausgebildet ist, den Stellmotor dahingehend zu steuern, das zumindest eine Fahrzeugelement in Reaktion auf das Erkennergebnis zu betätigen.

21. Sprachsteuerungssystem gemäß Anspruch 20, das eine Rückleuchte (2) gemäß einem der Ansprüche 13 - 15 und/oder einen Scheinwerfer gemäß Anspruch 16 oder 17 und/oder eine Blinkleuchte gemäß Anspruch 18 oder 19.

22. Sprachsteuerungssystem gemäß Anspruch 20 oder 21, das eine Mikrofonanordnung in zumindest einem Lampengehäuse umfasst, und in dem
die Signalverarbeitungseinrichtung eine Beamformer-Einrichtung umfasst, die dazu ausgebildet ist, Mikrofonsignale von jedem der Mikrofone (3) der Mikrofonanordnung zu empfangen und ein gebeamformtes Mikrofonsignal zu erhalten; und in dem
das verarbeitete Signal das gebeamformte Mikrofonsignal umfasst.

23. Sprachsteuerungssystem gemäß Anspruch 22, in dem die Signalverarbeitungseinrichtung dazu ausgebildet ist,
einen Unterschied in der Signallaufzeit zwischen den Mikrofonsignalen zu detektieren, die durch die Mikrofone (3) der Mikrofonanordnung erhalten werden, die akustische Signale detektieren;
die Position eines Sprechers außerhalb des Fahrzeugs auf der Grundlage des detektierten Unterschieds in der Signallaufzeit der Mikrofonsignale zu bestimmen; und
das Mikrofonsignal von zumindest einem Mikrofon (3), das ein Audiosignal mit einem Leistungspegel detektiert, der eine vorbestimmte Grenze überschreitet, das nicht in einer vorbestimmten Nähe der bestimmten Position des Sprechers außerhalb des Fahrzeugs erzeugt wird, zu dämpfen.

24. Sprachsteuerungssystem gemäß Anspruch 22, in dem die Signalverarbeitungseinrichtung dazu ausgebildet ist,
einen Unterschied in der Signallaufzeit zwischen den Mikrofonsignalen zu detektieren, die durch die Mikrofone erhalten werden, die akustische Signale detektieren;
einen vertikalen Einfallswinkel der akustischen Signale in Hinsicht auf eine horizontale Ebene auf der Grundlage des detektierten Unterschieds in der Signallaufzeit zu bestimmen; und
Mikrofonsignale, die aus akustischen Signalen mit einem vorbestimmten Einfallswinkel in Hinsicht auf eine horizontale Ebene, der unterhalb einer vorbestimmten Grenze liegt, zu dämpfen.

## Revendications

1. Procédé de commande vocale d'au moins un élément de véhicule depuis l'extérieur d'une cabine de véhicule, comprenant
la détection d'un énoncé verbal à l'aide d'au moins un microphone (3) afin d'obtenir au moins un signal de microphone ;
le traitement du signal de microphone au moins en vue de la reconnaissance de parole de l'énoncé verbal afin d'obtenir un résultat de reconnaissance ; et
la commande automatique dudit au moins un élément de véhicule sur la base du résultat de la reconnaissance ;
**caractérisé par**
l'agencement d'au moins un microphone (3), en particulier un microphone directionnel (3), dans un logement de lampe installé dans le corps du véhicule à l'extérieur de la cabine de véhicule afin de détecter l'énoncé verbal.

2. Procédé selon la revendication 1, dans lequel ledit au moins un élément de véhicule est l'un parmi un capot, une trappe d'accès, un coffre et une capote.

3. Procédé selon la revendication 2, dans lequel ledit au moins un microphone (3) est installé dans le logement d'un feu arrière (2) ou d'un phare avant ou d'un clignotant ou d'un feu antibrouillard.

4. Procédé selon la revendication 3, dans lequel au moins deux microphones (3) sont agencés à la verticale ou à l'horizontale ou en diagonale dans le logement d'un feu arrière (2) ou d'un phare avant ou d'un clignotant ou d'un feu antibrouillard.

5. Procédé selon la revendication 3, dans lequel au moins trois microphones (3) sont agencés sous la forme d'un triangle ou sous la forme d'un L dans le logement d'un feu arrière (2) ou d'un phare avant ou d'un clignotant ou d'un feu antibrouillard.

6. Procédé selon la revendication 3, dans lequel au moins quatre microphones (3) sont agencés sous la forme d'un polygone, en particulier un carré ou un rectangle, ou de manière circulaire ou elliptique dans le logement d'un feu arrière (2) ou d'un phare avant ou d'un clignotant ou d'un feu antibrouillard.

7. Procédé selon l'une des revendications précédentes, dans lequel au moins un ensemble de microphones est installé dans un logement de lampe à l'extérieur de la cabine de véhicule, grâce auquel l'énoncé verbal est détecté, et comprenant en outre une mise en forme de faisceau des signaux de microphones obtenus par les microphones (3) de l'ensemble de microphones afin d'obtenir un signal de microphone à faisceau mis en forme qui est traité en vue d'une reconnaissance de parole.

8. Procédé selon la revendication 7, dans lequel au moins deux microphones (3) sont agencés dans au moins un logement de lampe installé dans le corps de véhicule à l'extérieur de la cabine de véhicule et comprenant en outre
la détection d'une différence de temps de transit de signal entre un premier signal de microphone obtenu par l'un desdits au moins deux microphones (3) et un second signal de microphone obtenu par un autre desdits au moins deux microphones (3) ;
la détermination de l'emplacement d'un haut-parleur à l'extérieur du véhicule sur la base de la différence détectée de temps de transit de signal des premier et second signaux de microphones ; et
l'atténuation du signal de microphone d'au moins un microphone (3) qui détecte un signal audio ayant un niveau de puissance qui dépasse une limite prédéterminée qui n'est pas généré dans une proximité prédéterminée de l'emplacement déterminé du haut-parleur à l'extérieur du véhicule.

9. Procédé selon la revendication 8, dans lequel la différence dans le temps de transit de signal des signaux de microphones des microphones (3) d'un ensemble de microphones ou dans le temps de transit de signal d'un signal de microphone à faisceau mis en forme d'un ensemble de microphones et d'un autre ensemble de microphones est détectée, sur la base de laquelle l'emplacement du haut-parleur à l'extérieur du véhicule est déterminé.

10. Procédé selon l'une des revendications 1 à 3, dans lequel
au moins deux microphones (3) sont agencés à la verticale ou en diagonale dans le logement d'un feu arrière (2) ou au moins trois microphones (3) sont agencés sous la forme d'un L dans le logement d'un feu arrière (2), dans lequel au moins deux microphones (3) sont agencés à la verticale, ou au moins quatre microphones (3) sont agencés sous la forme d'un carré ou d'un rectangle ou de manière circulaire ou elliptique dans le logement d'un feu arrière (2) ;
chaque microphone (3) détecte des signaux acoustiques afin d'obtenir un signal de microphone ; et comprenant en outre
la détection d'une différence de temps de transit de signal entre au moins deux signaux de microphones obtenus par au moins deux microphones (3) qui sont agencés à la verticale ;
la détermination d'un angle d'incidence vertical des signaux acoustiques par rapport à un plan horizontal sur la base de la différence détectée de temps de transit de signal ; et
l'atténuation des signaux de microphones obtenus à partir des signaux acoustiques ayant un angle d'incidence vertical déterminé par rapport à un plan horizontal qui se trouve sous une limite prédéterminée afin d'obtenir un signal de microphone à faisceau mis en forme qui est traité en vue de la reconnaissance de parole.

11. Procédé selon l'une des revendications précédentes, dans lequel au moins un microphone (3) est installé dans une partie d'un feu arrière (2) qui est fixée sur le corps du véhicule et qui n'est pas fixée sur une trappe d'accès ou un coffre du véhicule.

12. Logement de lampe destiné à être installé dans un corps de véhicule à l'extérieur d'un habitacle de véhicule, **caractérisé en ce qu'**il comprend au moins un microphone (3), en particulier un microphone directionnel (3).

13. Feu arrière (2) destiné à une automobile, comprenant le logement de lampe selon la revendication 12 en tant que logement de feu arrière (2).

14. Feu arrière (2) selon la revendication 13, dans lequel au moins deux microphones (3) sont agencés à la verticale ou à l'horizontale ou en diagonale ou au moins trois microphones (3) sont agencés sous la forme d'un triangle ou sous la forme d'un L ou au moins quatre microphones (3) sont agencés sous la forme d'un polygone, en particulier, un triangle, un carré ou un rectangle, ou de manière circulaire ou elliptique dans le logement de feu arrière (2).

15. Feu arrière (2) selon la revendication 13 ou 14, comprenant une partie fixée sur le corps du véhicule et une autre partie fixée sur une trappe d'accès ou un coffre d'un véhicule et dans lequel ledit au moins un microphone (3) est positionné dans la partie du feu arrière (2) qui est fixée sur le corps du véhicule.

16. Phare d'automobile, comprenant le logement de lampe selon la revendication 12 en tant que logement de phare.

17. Phare d'automobile selon la revendication 16, dans lequel au moins deux microphones (3) sont agencés à la verticale ou à l'horizontale ou en diagonale ou au moins trois microphones (3) sont agencés sous la forme d'un triangle ou sous la forme d'un L ou au moins quatre microphones (3) sont agencés sous la forme d'un polygone, en particulier d'un triangle, d'un carré ou d'un rectangle, ou de manière circulaire ou elliptique dans le logement de phare.

18. Feu de clignotant d'automobile, comprenant le logement de lampe selon la revendication 12 en tant que logement de feu de clignotant.

19. Feu de clignotant selon la revendication 18, dans lequel au moins deux microphones (3) sont agencés à la verticale ou à l'horizontale ou en diagonale ou au moins trois microphones (3) sont agencés sous la forme d'un triangle ou sous la forme d'un L ou au moins quatre microphones (3) sont agencés sous la forme d'un polygone, en particulier d'un triangle, d'un carré ou d'un rectangle, ou de manière circulaire ou elliptique dans le logement de clignotant.

20. Système de commande vocale destiné à la commande vocale d'au moins un élément de véhicule, comprenant au moins un logement de lampe selon la revendication 12, dans lequel ledit au moins un microphone (3) est configuré afin de détecter un signal acoustique de façon à obtenir au moins un signal de microphone ;
un moyen de traitement de signal configuré afin de recevoir et de traiter ledit au moins un signal de microphone de façon à obtenir un signal traité ;
un moyen de reconnaissance de la parole configuré afin de recevoir le signal traité et d'obtenir un résultat de reconnaissance sur la base du signal traité ;
au moins un actionneur configuré afin d'actionner l'élément de véhicule au moins ; et
un moyen de commande configuré afin de commander l'actionneur de façon à actionner ledit au moins un élément de véhicule en réponse au résultat de reconnaissance.

21. Système de commande vocale selon la revendication 20, comprenant un feu arrière (2) selon l'une des revendications 13 à 15 et/ou un phare selon la revendication 16 ou 17 et/ou un feu de clignotant selon la revendication 18 ou 19.

22. Système de commande vocale selon la revendication 20 ou 21, comprenant un ensemble de microphones dans au moins un logement de lampe ; et dans lequel
le moyen de traitement de signal comprend un moyen de mise en forme de faisceau configuré afin de recevoir des signaux de microphones de la part de chacun des microphones (3) de l'ensemble de microphones et d'obtenir un signal de microphone à faisceau mis en forme ; et dans lequel
le signal traité comprend le signal de microphone à faisceau mis en forme.

23. Système de commande vocale selon la revendication 22, dans lequel le moyen de traitement de signal est configuré afin de
détecter une différence de temps de transit de signal entre les signaux de microphones obtenus par les microphones (3) de l'ensemble de microphones détectant des signaux acoustiques ;
déterminer l'emplacement d'un haut-parleur à l'extérieur du véhicule sur la base de la différence détectée de temps de transit de signal des signaux de microphones ; et
atténuer le signal de microphone d'au moins un microphone (3) qui détecte un signal audio ayant un niveau de puissance qui dépasse une limite prédéterminée qui n'est pas générée dans une proximité prédéterminée de l'emplacement déterminé du haut-parleur à l'extérieur du véhicule.

24. Système de commande vocale selon la revendication 22, dans lequel le moyen de traitement de signal est configuré afin de
détecter une différence de temps de transit de signal entre les signaux de microphones obtenus par les microphones (3) détectant des signaux acoustiques ;
déterminer un angle d'incidence vertical des signaux acoustiques par rapport à un plan horizontal sur la base de la différence détectée de temps de transit de signal ; et
atténuer les signaux de microphones obtenus à partir des signaux acoustiques ayant un angle d'incidence vertical déterminé par rapport à un plan horizontal qui se trouve sous une limite prédéterminée.
